# EUROPEAN PATENT SPECIFICATION

(11) **EP 4 293 354 B1**
(45) Date of publication and mention of the grant of the patent: **19.11.2025**
(21) Application number: 22382581.1
(22) Date of filing: 17.06.2022
(51) Int. Cl.: A62B 23/02, A62B 18/02, A62B 18/08, G01N 31/22

(54) **FACE PROTECTIVE DEVICE WITH VISUAL EXPOSURE TIME INDICATION SYSTEM**
GESICHTSSCHUTZVORRICHTUNG MIT VISUELLEM ANZEIGER FÜR DIE EXPOSITIONSZEIT
DISPOSITIF DE PROTECTION DU VISAGE AVEC SYSTÈME D'INDICATION VISUELLE DE LA DURÉE D'EXPOSITION

(43) Date of publication of application: 20.12.2023
(73) Proprietor: Andalusi Beverages, S.L., 28003 Madrid (ES)
(72) Inventor: Rodríguez Fernández, José Antonio, 28003 Madrid (ES); Rodríguez Lucena, David, 41013 Sevilla (ES); Roales Batanero, Javier, 41013 Sevilla (ES); Pedrosa Poyato, José María, 41013 Sevilla (ES)
(74) Representative: Pons IP

(56) References cited:
- WO-A1-2012/080704
- CN-A- 101 103 268
- US-A1- 2006 110 835
- US-A1- 2006 236 913
- US-A1- 2016 011 157

## Description

The present invention relates to a device that visually indicates the end of the useful life of a face protective device against biological agents, hereinafter referred to as mask.

### BACKGROUND OF THE INVENTION

Air pollution is widely acknowledged as a major risk factor for global public health, causing thousands of premature deaths in Europe each year, as well as cardiovascular and pulmonary diseases that affect millions of patients. The size of the pollutants plays a determining role, as the smallest particles are the most likely to become airborne and, therefore, to be more dangerous. In fact, particles larger than 10 µm are usually collected in the upper portion of the respiratory system and thus cannot enter the deep portion of the lungs. However, particles smaller than 10 µm are breathable, which means that they are capable of penetrating deep into the lungs. Those particles include, inter alia, bacteria, viruses, clay, silt, tobacco smoke and metallic fumes. The European Environment Agency (EEA) estimated that there were 417,000 premature deaths in 2018 that can be attributed to particulate matter (PM) with a diameter <2.5 µm (PM2.5), this size range being considered as most dangerous.

A container comprising an exposure time indicator for oxidising gases in the environment is known from US2006110835A1.

Furthermore, the unexpected emergence of the coronavirus (COVID-19) has raised concerns about whether air pollution may increase the severity of the illness and the risk of death after infection, as well as facilitate the spreading of severe acute respiratory syndrome by coronavirus 2 (SARS-CoV-2) or other pathogens of respiratory infectious diseases, such as tuberculosis and measles or influenza (H1N1 A).

The danger of pollutants in the air can be solved through the application of basic controls, such as increasing ventilation, providing suitable filter media in rooms or providing workers with protective equipment, such as protective masks.

Likewise, protective masks have been widely used by hospital staff, laboratory researchers, construction site workers, as well as the general public in highly polluted areas or during flu season. These are made up of a filtering barrier, which is a critical component that determines the level of protection of the mask, as the filtering efficiency depends on the particle size and the speed of the air flow.

Since the 2019 pandemic, the use of masks for long periods of time is becoming more and more frequent for users. This can lead to breathing difficulties, and to a greater sensation of feeling overwhelmed and congested, due to the accumulation of carbon dioxide and moisture inside the mask. In addition, prolonged mask use for several hours in a row causes the same air to be recirculated over and over again, causing discomfort during breathing, favouring congestion and causing loss of filtering efficiency. Here, we would be talking about a mask that has exhausted the minimum protection capacity thereof. In fact, there are maximum use times that are limited for the different types of masks, which, nevertheless, still lack a system that visually indicates the end of the useful life thereof. In this manner, we are currently faced with the impossibility that the user himself, and other people who come into contact therewith, know in an easy and direct manner the moment when their mask is no longer useful and must be therefore discarded and replaced with a new one, with the corresponding health risks that this entails.

### DESCRIPTION OF THE INVENTION

A chemical reaction or mechanism is described that is modified during the use time of the mask. The components that form part of the reaction will be contained in some type of specific compatible carrier that will later be adhered or included in the mask during the manufacturing process.

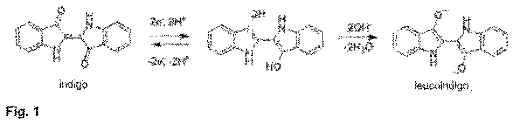

The colouring is indigo blue, very insoluble in water, which undergoes a chemical reduction process with sodium dithionite (Na₂S₂O₄) in basic medium. Under these conditions, indigo turns from its characteristic blue to a completely soluble and translucent yellowish colour (Fig. 1). From this point, the colour change timing is modulated by using what we call "sacrificial reagent", which is nothing more than an excess of the reducing agent (sodium dithionite) that is consumed as the oxygen enters, maintaining the yellow colour during the use of the device, until it is finished and the colour change begins, indicating the end of the use time of the mask.

Disclosed is a protective device with visual exposure time indication system and loss of effectiveness comprising
- a face protective device, comprising two sides, a first internal side, configured to be in contact with the skin of a subject using the face protective device; and a second external side configured to be in contact with the air; and
- an exposure time indicator through colour change characterised in that it comprises a container that is semi-permeable to oxygen with a surface of 0.5 to 5 cm by 0.5 to 5 cm, adhered by means of a system selected from an adhesive, heat sealing and ultrasonic sealing, on the second side of the face protective device, and in that the container comprises between 0.1 ml and 3 ml of a basic aqueous solution at a pH between 10 and 14 containing a mass ratio between indigo and sodium dithionite between 1:0.7 and 1:1.8.

A protective device according to the invention is defined in claim 1.

Said device has the advantages that by having placed the expiration indicator close to an area where the mask is in contact with the skin, body temperature aids in minimising the effect of external temperature for temporary exposures. In addition, the airflow required to effectively influence the colour change timing is well above normal respiratory flow. The reagents, being completely isolated by the container that is semi-permeable to oxygen and the small amount thereof, do not pose a risk to whoever is using the device. The mass ratio between indigo and sodium dithionite at 1:0.7 is equivalent to 1.1 dithionite equivalents, and it is the minimum required to reduce all the indigo, making a colour change towards translucent yellow. With a mass ratio of 1:1.5, an excess of sacrificial reagent is included so that, once the mask is exposed to the air, the estimated time for all of the indigo to oxidise and change colour back to its original blue is 8 h.

In the present invention, "air" is understood as the gaseous, transparent, odourless and tasteless substance that envelops the Earth and forms the atmosphere; it is mainly made up of oxygen and nitrogen, and varying amounts of argon, water vapour and carbon dioxide and may comprise bacteria, viruses, clay, silt, tobacco smoke and metallic fumes. In a preferred embodiment, the container that is semi-permeable to oxygen is made of a heat-sealable polymer. More preferably the heat-sealable polymer is selected from polypropylene, PVC, polyamide, cellulose acetate and any combination of the above.

In another preferred embodiment, the container that is semi-permeable to oxygen is made of a polymer that can be sealed using ultrasound. More preferably the polymer that can be sealed using ultrasound is selected from polypropylene, PVC, polyamide, cellulose acetate and any combination of the above.

In another preferred embodiment, the container that is semi-permeable to oxygen is made of a heat-sealable polymer or of a polymer that can be sealed using ultrasound, wherein said heat-sealable polymer or polymer that can be sealed using ultrasound is selected from polypropylene, polyamide PVC, cellulose acetate and any combination of the above.

In another even more preferred embodiment, the thickness of the heat-sealable polymer container is between 40 µm and 100 µm. And even more preferably between 50 µm and 90 µm.

In another preferred embodiment, the size of the container surface is 2.5 cm to 3.5 cm by 2.5 cm to 3.5 cm.

In another preferred embodiment, the adhesive is selected from epoxy resins, cyanoacrylates, polyurethanes, silicones, acrylics, phenolics, polyimides, vinyls, neoprene and any combination thereof.

In another preferred embodiment, the pH is between 10.5 and 11.5. The advantage of said pH range is that the solution is the least caustic possible and therefore less dangerous both for the container that is semi-permeable to oxygen and for the user who uses the protective system.

In another preferred embodiment, the basic aqueous solution is selected from a solution comprising NaOH, KOH, RbOH, CsOH, Be(OH)₂, Mg(OH)₂, Ca(OH)₂ and any combination of the above.

In another preferred embodiment, the basic aqueous solution is NaOH and the pH is 11.

In another preferred embodiment, the mass ratio of indigo with sodium dithionite is 1:1. With a mass ratio of 1:1, the estimated time to oxidise all the indigo and for the colour change to occur is 4 h. Said value coincides with the recommended use time of some face protectors.

In another preferred embodiment, the mass ratio of indigo with sodium dithionite is 1:1.5.

With a mass ratio of 1:1.5, the estimated time to oxidise all the indigo and for the colour change to occur is 8 h. Said value coincides with the recommended use time of different long-lasting face protectors.

In a preferred embodiment, the face protective device is selected from a 1-ply surgical mask, 3-ply surgical mask, N95 mask, KN95 mask, KF94 mask, FFP1 mask, FFP2 mask with and without exhalation valve, FFP3 mask with and without exhalation valve.

In a more preferred embodiment, the face protective device is a 3-ply surgical mask, and wherein the exposure time indicator through colour change comprises a polypropylene container with a surface of 3 cm x 2.5 cm, adhered by means of an adhesive on the second side of the mask, and comprising 1 ml of an aqueous solution of NaOH at pH = 11 containing 2 mg of Indigo, 2 mg of sodium dithionite.

In a more preferred embodiment, the face protective device is an FFP2 mask without an exhalation valve, and wherein the exposure time indicator through colour change comprises a polypropylene container with a surface of 3 cm x 3 cm, adhered by means of an adhesive on the second side of the mask, and comprising 1.1 ml of an aqueous solution of NaOH at pH = 11 containing 2 mg of Indigo, 2.6 mg of sodium dithionite.

According to the invention, the indicator device in which the container that is semi-permeable to oxygen comprises the solid reagents (indigo and dithionite in the corresponding proportions) and a capsule inside containing the basic aqueous solution and wherein said capsule is configured to be broken.

In another preferred embodiment, the indicator device further comprises insulating means, preferably airtight and impermeable to oxygen, adjacent to the expiration indicator device, and enveloping said indicator device completely, and wherein said means are configured to be removed, withdrawn and/or broken. In a more preferred embodiment, the insulating, airtight and impermeable medium is a Nylon bag with a thickness of at least 0.24 mm.

Also disclosed is a kit characterised in that it comprises
I. an airtight container that is impermeable to oxygen configured to be removed; and
II. the protective device with the visual indication system described above inside the airtight container.

A kit according to the invention is defined in claim 14.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Fig. 1****.** Reactions involved in the transformation of indigo (blue) into leucoindigo (translucent yellow).

### EXAMPLES

Next, the invention will be illustrated by means of assays carried out by the inventors, which demonstrate the effectiveness of the product of the invention.

### Example 1

It is a container that is semi-permeable to oxygen made of AG194 polypropylene (Avery Dennison) 60 microns thick with a surface of 3 cm x 2.5 cm glued on a surgical mask, comprising therein 2 mg of Indigo (Sigma-Aldrich), 2 mg of sodium dithionite (Sigma-Aldrich) and 1 ml of an aqueous solution of NaOH at pH = 11. To prevent the errors caused by manual preparation of devices, a sample of 5 devices prepared with this recipe was used, obtaining an average colour change beginning at 3 h and resulting in a definitive darkening at 4 h.

### Example 2

It is a container that is semi-permeable to oxygen made of AG194 polypropylene (Avery Dennison) 60 microns thick with a surface of 3 cm x 3 cm glued on an FFP2 mask, comprising therein 2 mg of Indigo (Sigma-Aldrich), 2.6 mg of sodium dithionite (Sigma-Aldrich) and 1.1 ml of an aqueous solution of NaOH at pH = 11. To prevent the errors caused by manual preparation of devices, a sample of 6 devices prepared with this recipe was used, obtaining an average colour change beginning at 7.2 h and resulting in a definitive darkening at 8.1 h.

## Claims

1. A protective device with visual exposure time indication system and loss of effectiveness comprising
• a face protective device, comprising two sides, a first internal side, configured to be in contact with the skin of a subject using the face protective device; and a second external side configured to be in contact with the air; and
• an exposure time indicator through colour change **characterised in that** it comprises a container that is semi-permeable to oxygen with a surface of 0.5 to 5 cm by 0.5 to 5 cm, adhered by means of a system selected from an adhesive, heat sealing and ultrasonic sealing, on the second side of the face protective device; and
wherein the container that is semi-permeable to oxygen comprises the solid reagents indigo and dithionite in mass proportions between 1:0.7 and 1:1.5 and a capsule inside containing 0.1 ml to 3 ml of a basic aqueous solution at a pH between 10 and 14 and wherein said capsule is configured to be broken.

2. The device according to claim 1, wherein the polymer container is adhered by means of an adhesive selected from among epoxy resins, cyanoacrylates, polyurethanes, silicones, acrylics, phenolics, polyimides, vinyls, neoprene and any combination thereof.

3. The device according to claim 1, wherein the container that is semi-permeable to oxygen is made of a heat-sealable polymer or of a polymer that can be sealed using ultrasound, wherein said heat-sealable polymer or polymer that can be sealed using ultrasound is selected from polypropylene, polyamide PVC, cellulose acetate and any combination of the above.

4. The device according to any of claims 1 to 3, wherein the thickness of the polymer container is between 40 µm and 100 µm.

5. The device according to claim 4, wherein the thickness is between 50 µm and 90 µm.

6. The device according to any of claims 1 to 5, wherein the size of the container surface is 2.5 cm to 3.5 cm by 2.5 cm to 3.5 cm.

7. The device according to any of claims 1 to 6, wherein the basic aqueous solution is selected from a solution comprising NaOH, KOH, RbOH, CsOH, Be(OH)₂, Mg(OH)₂, Ca(OH)₂ and any combination of the above.

8. The device according to any of claims 1 to 7, wherein the basic aqueous solution is NaOH and the pH is 11.

9. The device according to any of claims 1 to 8, wherein the face protective device is selected from 1-ply surgical mask, 3-ply surgical mask, N95 mask, KN95 mask, KF94 mask, FFP1 mask, FFP2 mask with and without exhalation valve, FFP3 mask with and without exhalation valve.

10. The device according to claim 9, wherein the face protective device is a 3-ply surgical mask, and wherein the exposure time indicator through colour change comprises a polypropylene container with a surface of 3 cm x 2.5 cm, adhered by means of an adhesive on the second side of the mask, and comprising therein 2 mg of indigo, 2 mg of sodium dithionite and 1 ml of an aqueous solution of NaOH at pH = 11.

11. The device according to claim 9, wherein the face protective device is an FFP2 mask without an exhalation valve, and wherein the exposure time indicator through colour change comprises a polypropylene container with a surface of 3 cm x 3 cm, adhered by means of an adhesive on the second side of the mask, and comprising 2 mg of indigo, 2.6 mg of sodium dithionite and 1.1 ml of an aqueous solution of NaOH at pH = 11 inside.

12. The device according to any of claims 1 to 11, wherein the indicator further comprises insulating means adjacent to the container, and enveloping said indicator completely, and wherein said means are configured to be removed, withdrawn and/or broken.

13. The device according to claim 12, wherein the insulating, airtight and impermeable medium is a Nylon bag with a thickness of at least 0.24 mm.

14. A kit **characterised in that** it comprises
i. an airtight container that is impermeable to oxygen configured to be removed and/or broken; and
ii. the protective device with visual indication system according to any of claims 1 to 13, inside the airtight container that is impermeable to oxygen.

## Patentansprüche

1. Schutzvorrichtung mit visuellem System zur Anzeige der Expositionszeit und des Wirkungsverlustes, die Folgendes umfasst
- eine Gesichtsschutzvorrichtung, die zwei Seiten umfasst, eine erste Innenseite, die so ausgelegt ist, dass sie mit der Haut einer Person, die die Gesichtsschutzvorrichtung benutzt, in Kontakt ist; und eine zweite Außenseite, die für den Kontakt mit der Luft ausgelegt ist; und
- einen Expositionszeit-Indikator durch Farbveränderung, **dadurch gekennzeichnet, dass** er ein Behältnis mit einer Oberfläche von 0,5 bis 5 cm mal 0,5 bis 5 cm umfasst, das halbdurchlässig für Sauerstoff ist, das mittels eines aus einem Klebstoff, einer Heißversiegelung und einer Ultraschallversiegelung ausgewählten Systems auf der zweiten Seite der Gesichtsschutzvorrichtung angebracht wird; und
wobei das Behältnis, das halbdurchlässig für Sauerstoff ist, die festen Reagenzien Indigo und Dithionit in Massenverhältnissen zwischen 1:0,7 und 1:1,5 und eine Kapsel im Inneren umfasst, die 0,1 ml bis 3 ml einer basischen wässrigen Lösung mit einem pH-Wert zwischen 10 und 14 enthält, und wobei die Kapsel so ausgelegt ist, dass sie zerbrochen werden kann.

2. Vorrichtung nach Anspruch 1, bei der das Polymerbehältnis mit einem Klebstoff angebracht ist, der aus Epoxidharzen, Cyanacrylaten, Polyurethanen, Silikonen, Acrylaten, Phenolen, Polyimiden, Vinyls, Neopren und einer beliebigen Kombination davon ausgewählt ist.

3. Vorrichtung nach Anspruch 1, wobei das Behältnis, das halbdurchlässig für Sauerstoff ist, aus einem heißsiegelbaren Polymer oder aus einem Polymer, das unter Verwendung von Ultraschall versiegelt werden kann, hergestellt ist, wobei das heißsiegelbare Polymer oder das Polymer, das unter Verwendung von Ultraschall versiegelt werden kann, ausgewählt ist aus Polypropylen, Polyamid, PVC, Celluloseacetat und einer beliebigen Kombination der oben genannten.

4. Vorrichtung nach einem der Ansprüche 1 bis 3, wobei die Dicke des Polymerbehältnisses zwischen 40 µm und 100 µm liegt.

5. Vorrichtung nach Anspruch 4, wobei die Dicke zwischen 50 µm und 90 µm liegt.

6. Vorrichtung nach einem der Ansprüche 1 bis 5, wobei die Größe der Behältnisoberfläche 2,5 cm bis 3,5 cm mal 2,5 cm bis 3,5 cm beträgt.

7. Vorrichtung nach einem der Ansprüche 1 bis 6, wobei die basische wässrige Lösung aus einer Lösung ausgewählt ist, die NaOH, KOH, RbOH, CsOH, Be(OH)₂, Mg(OH)₂, Ca(OH)₂ und eine beliebige Kombination der oben genannten umfasst.

8. Vorrichtung nach einem der Ansprüche 1 bis 7, wobei die basische wässrige Lösung NaOH ist und der pH-Wert 11 beträgt.

9. Vorrichtung nach einem der Ansprüche 1 bis 8, wobei die Gesichtsschutzvorrichtung ausgewählt ist aus chirurgischer 1-lagiger Maske, chirurgischer 3-lagiger Maske, N95-Maske, KN95-Maske, KF94-Maske, FFP1-Maske, FFP2-Maske mit und ohne Ausatemventil, FFP3-Maske mit und ohne Ausatemventil.

10. Vorrichtung nach Anspruch 9, wobei die Gesichtsschutzvorrichtung eine 3-lagige chirurgische Maske ist und wobei der Expositionszeit-Indikator durch Farbveränderung ein Polypropylenbehältnis mit einer Fläche von 3 cm x 2,5 cm umfasst, das mit einem Klebstoff auf der zweiten Seite der Maske angebracht ist und darin 2 mg Indigo, 2 mg Natriumdithionit und 1 ml einer wässrigen NaOH-Lösung mit pH = 11 enthält.

11. Vorrichtung nach Anspruch 9, wobei die Gesichtsschutzvorrichtung eine FFP2-Maske ohne Ausatemventil ist und wobei der Expositionszeit-Indikator durch Farbveränderung ein Polypropylenbehältnis mit einer Fläche von 3 cm x 3 cm umfasst, das mit einem Klebstoff auf der zweiten Seite der Maske angebracht ist und im Inneren 2 mg Indigo, 2,6 mg Natriumdithionit und 1,1 ml einer wässrigen NaOH-Lösung mit pH = 11 enthält.

12. Vorrichtung nach einem der Ansprüche 1 bis 11, wobei der Indikator ferner Isoliermittel umfasst, die an das Behältnis angrenzen und den Indikator vollständig umhüllen, und wobei die Mittel so ausgelegt sind, dass sie entfernt, herausgezogen und/oder zerbrochen werden können.

13. Vorrichtung nach Anspruch 12, wobei das isolierende, luftdichte und undurchlässige Medium ein Nylonbeutel mit einer Dicke von mindestens 0,24 mm ist.

14. Kit, **dadurch gekennzeichnet, dass** es Folgendes umfasst
i. ein luftdichtes, sauerstoffundurchlässiges Behältnis, das so ausgelegt ist, dass es entfernt und/oder zerbrochen werden kann; und
ii. die Schutzvorrichtung mit visuellem Anzeigesystem nach einem der Ansprüche 1 bis 13 im Inneren des luftdichten, sauerstoffundurchlässigen Behältnisses.

## Revendications

1. Dispositif de protection avec système d'indication visuelle du temps d'exposition et perte d'efficacité comprenant
- un dispositif de protection du visage, comprenant deux faces, une première face interne, configurée pour être en contact avec la peau d'un sujet utilisant le dispositif de protection du visage ; et une seconde face externe configurée pour être en contact avec l'air ; et
- un indicateur de temps d'exposition par changement de couleur **caractérisé en ce qu'**il comprend un récipient semi-perméable à l'oxygène avec une surface de 0,5 à 5 cm sur 0,5 à 5 cm, collé au moyen d'un système choisi parmi un adhésif, un thermoscellage et un scellage par ultrasons, sur le deuxième côté du dispositif de protection faciale ; et
dans lequel le récipient semi-perméable à l'oxygène comprend les réactifs solides indigo et dithionite dans des proportions massiques comprises entre 1:0,7 et 1:1,5 et une capsule à l'intérieur contenant 0,1 ml à 3 ml d'une solution aqueuse basique à un pH compris entre 10 et 14 et dans lequel ladite capsule est configurée pour être brisée.

2. Dispositif selon la revendication 1, dans lequel le récipient en polymère est collé au moyen d'un adhésif choisi parmi les résines époxy, les cyanoacrylates, les polyuréthanes, les silicones, les acryliques, les phénoliques, les polyimides, les vinyles, le néoprène et toute combinaison de ceux-ci.

3. Dispositif selon la revendication 1, le récipient semi-perméable à l'oxygène est constitué d'un polymère thermoscellable ou d'un polymère pouvant être scellé à l'aide d'ultrasons, dans lequel ledit polymère thermoscellable ou polymère pouvant être scellé à l'aide d'ultrasons est choisi parmi le polypropylène, le polyamide PVC, l'acétate de cellulose et toute combinaison de ce qui précède.

4. Dispositif selon l'une quelconque des revendications 1 à 3, dans lequel l'épaisseur du contenant en polymère est comprise entre 40 µm et 100 µm.

5. Dispositif selon la revendication 4, dans lequel l'épaisseur est comprise entre 50 µm et 90 µm.

6. Dispositif selon l'une quelconque des revendications 1 à 5, où la taille de la surface du récipient est de 2,5 cm à 3,5 cm par 2,5 cm à 3,5 cm.

7. Dispositif selon l'une quelconque des revendications 1 à 6, dans lequel la solution aqueuse basique est choisie parmi une solution comprenant NaOH, KOH, RbOH, CsOH, Be(OH)₂, Mg(OH)₂, Ca(OH)₂ et toute combinaison des éléments ci-dessus.

8. Dispositif selon l'une quelconque des revendications 1 à 7, où la solution aqueuse basique est NaOH et le pH est de 11.

9. Dispositif selon l'une quelconque des revendications 1 à 8, dans lequel le dispositif de protection du visage est choisi parmi un masque chirurgical en 1 couche, un masque chirurgical 3 couches, un masque N95, un masque KN95, un masque KF94, un masque FFP1, un masque FFP2 avec et sans soupape d'expiration, un masque FFP3 avec et sans soupape d'expiration.

10. Dispositif selon la revendication 9, dans lequel le dispositif de protection faciale est un masque chirurgical à trois couches, et dans lequel l'indicateur de temps d'exposition par changement de couleur comprend un récipient en polypropylène avec une surface de 3 cm x 2,5 cm, collé au moyen d'un adhésif sur la deuxième face du masque, et comprenant 2 mg d'indigo, 2 mg de dithionite de sodium et 1 ml d'une solution aqueuse de NaOH à pH = 11.

11. Dispositif selon la revendication 9, dans lequel le dispositif de protection du visage est un masque FFP2 sans soupape d'expiration, et dans lequel l'indicateur de temps d'exposition par changement de couleur comprend un récipient en polypropylène d'une surface de 3 cm x 3 cm, collé au moyen d'un adhésif sur la deuxième face du masque, et comprenant 2 mg d'indigo, 2,6 mg de dithionite de sodium et 1,1 ml d'une solution aqueuse de NaOH à pH = 11 à l'intérieur.

12. Dispositif selon l'une quelconque des revendications 1 à 11, dans lequel l'indicateur comprend en outre des moyens isolants adjacents au conteneur et enveloppant complètement ledit indicateur, et dans lequel lesdits moyens sont configurés pour être retirés, retirés et/ou cassés.

13. Dispositif selon la revendication 12, dans lequel le milieu isolant, étanche à l'air et imperméable est un sac en nylon d'une épaisseur d'au moins 0,24 mm.

14. Un kit **caractérisé par le fait qu'**il comprend
i. un récipient étanche à l'oxygène configuré pour être retiré et/ou cassé ; et
ii. le dispositif de protection avec système d'indication visuelle selon l'une des revendications 1 à 13, à l'intérieur du récipient hermétiquement clos et imperméable à l'oxygène.
